# EUROPEAN PATENT APPLICATION

(11) **EP 4 492 558 A1**
(43) Date of publication of application: **15.01.2025**
(21) Application number: 24184764.9
(22) Date of filing: 26.06.2024
(51) Int. Cl.: H01M 50/503, H01M 10/42, H01M 50/209, H01M 50/516, H01M 50/55, H01M 50/522

(54) **ELECTRICAL ENERGY STORAGE MODULE AND PROCESSING METHOD**

(30) Priority: 11.07.2023 JP 2023113404
(71) Applicant: Prime Planet Energy & Solutions, Inc., Chuo-ku Tokyo 103-0022 (JP)
(72) Inventor: ITOH, Yusuke, Tokyo, 103-0022 (JP); UCHIDA, Yozo, Tokyo, 103-0022 (JP)
(74) Representative: Kuhnen & Wacker Patent- und Rechtsanwaltsbüro PartG mbB

(57) **Abstract**

Electrical energy storage module (100) including a plurality of electrical energy storage devices (12) and a bus bar (14). The electrical energy storage devices (12) are arranged in a first direction (P). The bus bar (14) is provided to link two of the electrical energy storage devices (12) that are adjacent to each other in the first direction (P). The bus bar (14) includes a grip part (144). The grip part (144) is a projection protruding from a surface (upper surface 14u) of the bus bar (14) or a penetration hole (2144). Method to to separate a bus bar (14) from an electrical energy storage device (12).

## Description

### BACKGROUND OF THE DISCLOSURE

### 1. Technical Field

The present disclosure relates to an electrical energy storage module.

### 2. Background

Japanese Patent Application Publication No. 2018-200832 discloses a battery terminal equipped with a current sensor, which includes a battery terminal formed of a metal plate with conductivity and the current sensor assembled to the battery terminal. The battery terminal includes a post part to be connected to a battery post, a load connection terminal part that is disposed side by side with the post part and connected to a load, and a bus bar with a linear shape having one end side coupled to the post part and the other end side coupled to the load connection terminal part. The current sensor includes a magnetism detection unit that is disposed on the other end side of the bus bar and detects magnetism to be generated by current flowing in the bus bar, and a current sensor main body that integrally holds the bus bar and the magnetism detection unit through resin molding. The bus bar includes a bent part that is formed by bending a side edge part of the bus bar in a longitudinal direction so as to have an L-shaped cross section.

According to Japanese Patent Application Publication No. 2018-200832, the bus bar having such a bent part can reduce the electric resistance of the bus bar at continuous electric conduction and additionally can improve the heat dissipation from a surface of the bus bar.

WO 2012/118014 discloses a battery system including a plurality of battery cells with positive and negative electrode terminals formed of different kinds of metals, in which the positive and negative electrode terminals of each battery cell are connected to each other with a metal plate. In the battery system, the metal plate bonds a first metal plate connected to one electrode terminal of the battery cell to a second metal plate formed of a metal different from that of the first metal plate and connected to the other electrode terminal. The first metal plate includes a first stack part that is stacked on the second metal plate. The second metal plate includes a second stack part that is stacked on the first metal plate. The first stack part includes a protrusion part and the second stack part includes a notch part through which the protrusion part is inserted. When the protrusion part is inserted into the notch part, the first metal plate and the second metal plate are brought into close contact with each other by a caulking structure with the protrusion part and the notch part. According to WO 2012/118014, this structure makes it possible to have the metal plates and the electrode terminals in a stable and low-resistance connection state for a long time.

### SUMMARY

The present inventor wants to separate a bus bar more easily from an electrical energy storage module.

The art disclosed herein provides an electrical energy storage module including a plurality of electrical energy storage devices arranged in a first direction, and a bus bar provided to link two of the electrical energy storage devices that are adjacent to each other in the first direction. The bus bar includes a grip part that corresponds to a projection protruding from a surface of the bus bar or a penetration hole. From the electrical energy storage module with such a structure, the bus bar is separated more easily.

The art disclosed herein provides a method for processing an electrical energy storage module including a plurality of electrical energy storage devices including electrode terminals and arranged in a first direction, and a bus bar provided to link two of the electrical energy storage devices that are adjacent to each other in the first direction. The processing method includes separating the bus bar from the electrical energy storage device by pulling a grip part provided at the bus bar, the grip part corresponding to a projection protruding from a surface of the bus bar or a hole. Such a structure can make it easier to separate the bus bar from the electrical energy storage device.

### BRIEF DESCRIPTION OF THE DRAWINGS

FIG. 1 is a perspective view of an electrical energy storage module 100;
FIG. 2 is a cross-sectional view of bonding parts between a bus bar 14 and electrode terminals;
FIG. 3 is a schematic cross-sectional view in one step of a processing method;
FIG. 4 is a cross-sectional view of bonding parts between a bus bar 214 and the electrode terminals;
FIG. 5 is a cross-sectional view of bonding parts between a bus bar 314 and the electrode terminals;
FIG. 6 is a cross-sectional view of bonding parts between a bus bar 414 and the electrode terminals;
FIG. 7 is a cross-sectional view of bonding parts between a bus bar 514 and the electrode terminals;
FIG. 8 is a perspective view of an electrical energy storage module 600; and
FIG. 9 is a perspective view of an electrical energy storage module 700.

### DESCRIPTION OF THE EMBODIMENTS

One embodiment of the art disclosed herein will hereinafter be described. The embodiment to be described herein is not intended to limit the art disclosed herein in particular. The art disclosed herein is not limited to the embodiment to be described here unless specific statement is made. The drawings are illustrated schematically and do not necessarily reflect the actual objects. The members and parts with the same operation are denoted by the same reference sign as appropriate and the overlapping description is omitted. In the drawings, reference signs R, L, U, D, F, and Rr respectively denote right, left, up, down, front, and rear. The notation "A to B" for a numerical range signifies a value "more than or equal to A and less than or equal to B", and encompasses also the meaning of being "more than A and less than B" unless specific statement is made.

In this specification, the term "electrical energy storage device" refers to a device that is charged and discharged by transfer of charge carriers between a pair of electrodes (a positive electrode and a negative electrode) through an electrolyte. Such electrical energy storage devices encompass secondary batteries such as lithium ion secondary batteries, nickel-hydrogen batteries, and nickel-cadmium batteries, and capacitors such as lithium ion capacitors and electrical double-layer capacitors. In the embodiments below, a lithium ion secondary battery is described as one example of the electrical energy storage device given above.

### <First embodiment>

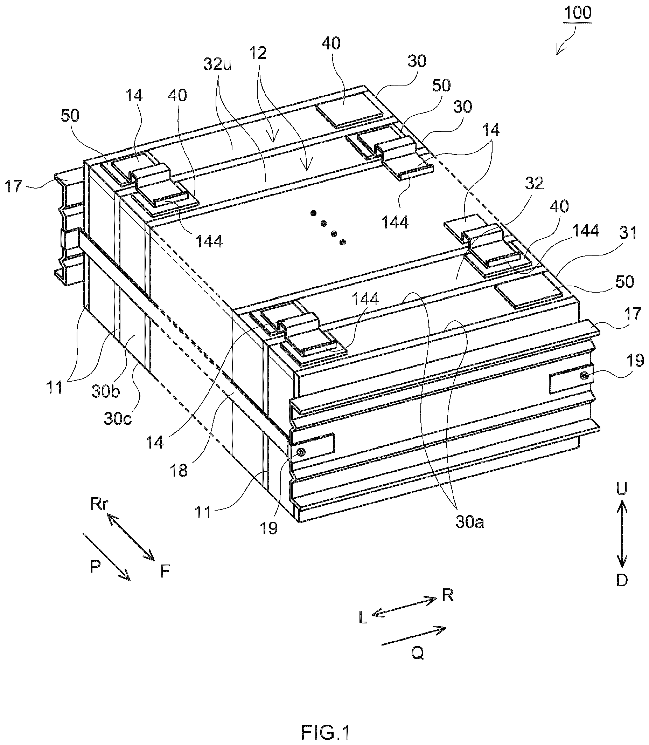

FIG. 1 is a perspective view of an electrical energy storage module 100. As illustrated in FIG. 1, the electrical energy storage module 100 includes a plurality of electrical energy storage devices 12 and bus bars 14. The electrical energy storage devices 12 are arranged in a first direction P. In a mode illustrated in FIG. 1, the electrical energy storage device 12 includes a case 30 with a rectangular parallelepiped shape, and includes a pair of opposite wide surfaces 30a, a pair of opposite narrow surfaces 30b, and a bottom surface 30c. The wide surface 30a is the widest surface of the case 30 here. The pair of opposite wide surfaces 30a are surfaces extending from a pair of opposite long sides of the bottom surface 30c with a rectangular shape, for example. The narrow surface 30b is the narrowest surface of the case 30 here. The pair of opposite narrow surfaces 30b are surfaces extending from a pair of opposite short sides of the bottom surface 30c, for example. As illustrated in FIG. 1, the electrical energy storage devices 12 are arranged so that the wide surfaces 30a face each other. The term "first direction P" described herein refers to a direction from one wide surface 30a to the other wide surface 30a in the electrical energy storage device 12 and a direction from a rear (Rr) side to a front (F) side in FIG. 1 (this similarly applies to second to fifth embodiments below).

The electrical energy storage device 12 includes, for example, the case 30, an electrode body (not illustrated) accommodated in the case 30, and an electrolyte solution (not illustrated). The case 30 includes a main body 31 and a sealing plate 32 as illustrated in FIG. 1. The main body 31 is a member that accommodates the electrode body and the electrolyte solution, for example. Here, the main body 31 preferably has a rectangular parallelepiped shape with one surface open. In the mode illustrated in FIG. 1, the main body 31 includes the pair of opposite wide surfaces 30a, the pair of opposite narrow surfaces 30b, and the bottom surface 30c. Here, the bottom surface 30c and the opening face each other. The sealing plate 32 is a member that covers the opening of the main body 31, for example. The sealing plate has a shape according to the opening of the main body 31, and here has a rectangular shape (including a substantially rectangular shape, which applies similarly to the description below). As the electrode body and the electrolyte solution of the electrical energy storage device 12, an electrode body and an electrolyte solution included in this type of electrical energy storage device can be used without particular limitations.

In this embodiment, the electrical energy storage device 12 includes a positive electrode terminal 40 and a negative electrode terminal 50 on an outer surface. In the mode illustrated in FIG. 1, the electrical energy storage device 12 includes the positive electrode terminal 40 and the negative electrode terminal 50 on an upper surface 32u of the sealing plate 32. The positive electrode terminal 40 is, for example, a member that is electrically connected to a positive electrode of the electrode body. The positive electrode terminal 40 includes, for example, a portion to be disposed inside the case 30 and a portion to be disposed outside the case 30. The portion to be disposed inside the case 30 is connected to the positive electrode of the electrode body. The portion to be disposed outside the case 30 is connected to the bus bar 14 to be described below. The positive electrode terminal 40 is preferably made of aluminum, for example. The negative electrode terminal 50 may have the same structure as the positive electrode terminal 40. The negative electrode terminal 50 is preferably made of copper, for example. Note that, as the positive electrode terminal 40 and the negative electrode terminal 50, electrode terminals that have conventionally been used in this type of electrical energy storage device can be used without particular limitations.

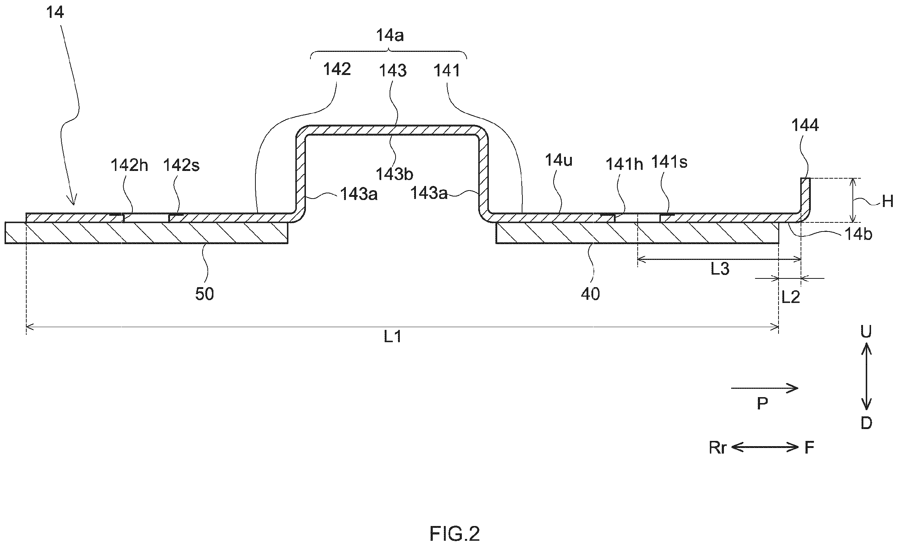

FIG. 2 is a cross-sectional view of bonding parts between the bus bar 14 and the electrode terminals. FIG. 2 illustrates an enlarged cross section of the bonding parts between the bus bar 14 and the electrode terminals along the first direction P. The bus bar 14 is, for example, a member that electrically connects the two electrical energy storage devices 12 that are adjacent to each other in the first direction P (see FIG. 1 and FIG. 2). As illustrated in FIG. 1, the bus bar 14 is provided to link the two electrical energy storage devices 12 that are adjacent to each other in the first direction P. In the two adjacent electrical energy storage devices 12, the positive electrode terminal 40 of one electrical energy storage device 12 and the negative electrode terminal 50 of the other electrical energy storage device 12 are linked. In the modes illustrated in FIG. 1 and FIG. 2, the bus bar 14 includes a grip part 144.

For example, the material of the bus bar 14 is preferably metal such as aluminum, an aluminum alloy, copper, a copper alloy, nickel, or stainless steel. As the bus bar 14, for example, a bus bar made of aluminum or an aluminum alloy is particularly preferably used. In this embodiment, the bus bar 14 has a plate shape. In this embodiment, the bus bar 14 is preferably manufactured by pressing one metal plate into a desired shape (here, a shape including the grip part 144). Alternatively, the grip part 144 may be provided at the bus bar 14 separately after one metal plate is pressed into a desired shape (here, a shape excluding the grip part 144).

As illustrated in FIG. 2, the bus bar 14 includes a main body 14a and an extension part 14b. In the mode illustrated in FIG. 2, the main body 14a includes a first connection part 141, a second connection part 142, and a coupling part 143. The first connection part 141 is a portion to be connected to the positive electrode terminal 40, for example. In the mode illustrated in FIG. 2, the first connection part 141 includes a first penetration hole 141h. At an inner wall surface of the first penetration hole 141h, a step difference 141s that is depressed from a surface of the first connection part 141 is provided. In the case of connecting the first connection part 141 and the positive electrode terminal 40, for example, the step difference 141s and the positive electrode terminal 40 are preferably bonded (for example, ultrasonic bonding, laser welding, or resistance welding) with the first connection part 141 and the positive electrode terminal 40 overlapped on each other. The second connection part 142 is a portion to be connected to the negative electrode terminal 50, for example. In the mode illustrated in FIG. 2, the second connection part 142 includes a second penetration hole 142h. At an inner wall surface of the second penetration hole 142h, a step difference 142s that is depressed from a surface of the second connection part 142 is provided. In the case of connecting the second connection part 142 and the negative electrode terminal 50, for example, the step difference 142s and the negative electrode terminal 50 are preferably bonded (for example, ultrasonic bonding, laser welding, or resistance welding) with the second connection part 142 and the negative electrode terminal 50 overlapped on each other. Note that the first penetration hole 141h, the step difference 141 s, the second penetration hole 142h, and the step difference 142s are not always necessary. These portions can be omitted in another embodiment.

The coupling part 143 is a portion that couples the first connection part 141 and the second connection part 142 to each other in this embodiment. As illustrated in FIG. 2, the coupling part 143 is disposed between the first connection part 141 and the second connection part 142. The coupling part 143 includes a pair of opposite rising parts 143a and a flat surface 143b here. The pair of opposite rising parts 143a extend from the first connection part 141 and the second connection part 142 to a side opposite to the electrical energy storage devices 12. The flat surface 143b connects between the pair of opposite rising parts 143a. It is preferable to provide the coupling part 143 with such a structure because, for example, an external force applied on the bus bar 14 due to vibration, impact, or the like can be relieved.

As illustrated in FIG. 2, the extension part 14b is a portion that extends from the main body 14a in the first direction P. In this embodiment, the extension part 14b extends from the main body 14a in the first direction P on the positive electrode terminal 40 side, and protrudes to the outside of the positive electrode terminal 40.

In the mode illustrated in FIG. 2, the bus bar 14 includes the grip part 144 at a tip end of the extension part 14b. The grip part 144 is a projection protruding from a surface of the bus bar 14 here. In this embodiment, the grip part 144 protrudes from an upper surface 14u of the bus bar 14 on a side opposite to the electrical energy storage device 12. The grip part 144 protrudes to the side opposite to the electrical energy storage device 12. For example, the grip part 144 is preferably a wall part provided at an end part of the first connection part 141 in the first direction P and extending along a second direction Q. The term "second direction Q" described herein refers to a direction that is orthogonal to the first direction P and extends along the wide surface 30a as illustrated in FIG. 1 (this applies similarly to the second to fifth embodiments below). The second direction Q is a direction from a left (L) side to a right (R) side in FIG. 1.

The size relation of the parts in the bus bar 14 is not limited in particular as long as the effect of the art disclosed herein is achieved. In one example of the bus bar 14 including the main body 14a with a length L1 of 50 mm to 80 mm (for example, about 65 mm), the grip part 144 preferably has a height H of about 2 mm to 10 mm (for example, 3 mm to 5 mm). The length L1 corresponds to the length of the bus bar 14 in the first direction in this embodiment. The extension part 14b preferably has a length L2 of about 2 mm to 5 mm. The length L2 corresponds to the shortest distance between the grip part 144 and an end part of the positive electrode terminal 40 that is on a side opposite to a center of the sealing plate 32 in this embodiment. The thickness of the bus bar 14 is preferably about 0.5 mm to 2 mm (for example, about 0.8 mm). A length L3 between the grip part 144 and the bonding part between the positive electrode terminal 40 and the bus bar 14 is preferably about 6 mm to 10 mm (for example, about 8 mm). The length L3 corresponds to the shortest distance between the grip part 144 and a center of the first penetration hole 141h in this embodiment.

As illustrated in FIG. 1, in the electrical energy storage module 100, the electrical energy storage devices 12 are bound in the first direction P. Here, the electrical energy storage module 100 includes spacers 11 and a pair of end plates 17. The spacer 11 is disposed between the electrical energy storage device 12 and the electrical energy storage device 12 that are adjacent to each other in the first direction P. The end plates 17 are disposed on both ends of the electrical energy storage devices 12 arranged in the first direction P, and bind the electrical energy storage devices 12. The end plates 17 are linked together with a binding band 18 made of metal. An end part of the binding band 18 is fixed with a screw 19.

The electrical energy storage module 100 is used for a variety of applications; in particular, the electrical energy storage module 100 can be preferably used as a motive power source for a motor (power source for driving) that is mounted on a vehicle such as a passenger car or a truck. The vehicle is not limited to a particular type, and suitable examples thereof include a plug-in hybrid electric vehicle (PHEV), a hybrid electric vehicle (HEV), a battery electric vehicle (BEV), and the like.

As described above, the electrical energy storage module 100 includes the electrical energy storage devices 12 and the bus bars 14. The electrical energy storage devices 12 are arranged in the first direction P. The bus bar 14 is provided to link two of the electrical energy storage devices 12 that are adjacent to each other in the first direction P. The bus bar 14 includes the grip part 144. The grip part 144 is a projection protruding from the surface of the bus bar 14 (in FIG. 2, upper surface 14u).

Since the bus bar 14 includes the grip part 144, for example, when the electrical energy storage module 100 is disassembled, the bus bar 14 can be pulled by gripping the grip part 144. This makes it easy to separate the bus bar 14 from the electrical energy storage device 12. Accordingly, the recyclability of the electrical energy storage module 100 can be improved, for example.

The grip part 144 is preferably provided at one end part of the bus bar 14 in the first direction P. Thus, for example, when the electrical energy storage module 100 is disassembled, it is possible to grip the grip part 144 more easily and accordingly, the bus bar 14 can be separated from the electrical energy storage device 12 more easily.

The bus bar 14 may include the main body 14a and the extension part 14b extending from the main body 14a in the first direction P. The bus bar 14 may include the grip part 144 at the tip end of the extension part 14b. When the grip part 144 is provided at the tip end of the extension part 14b of the bus bar 14, for example, the distance between the grip part 144 and the bonding part between the bus bar 14 and the terminal (for example, the positive electrode terminal 40) can be increased. Thus, for example, when the electrical energy storage module 100 is disassembled, it is possible to grip the grip part 144 more easily and accordingly, the bus bar 14 can be separated from the electrical energy storage device 12 still more easily.

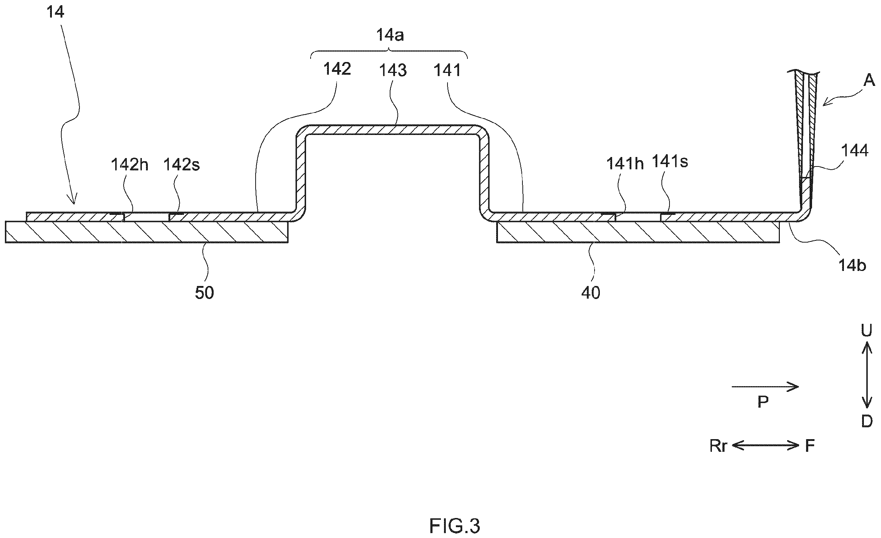

Next, a method of processing the electrical energy storage module 100 is described with reference to FIG. 3. FIG. 3 is a schematic cross-sectional view in one step of the processing method. FIG. 3 is a cross-sectional view schematically illustrating a process of separating the bus bar 14 from the electrical energy storage device 12 while the grip part 144 of the bus bar 14 is gripped by a jig A. The processing method for the electrical energy storage module 100 includes, for example, separating the bus bar 14 from the electrical energy storage device 12 by pulling the grip part 144 provided at the bus bar 14. By carrying out this processing method, the bus bar 14 can be separated from the electrical energy storage device 12 easily and furthermore, the recyclability of the electrical energy storage module 100 can be improved. Note that the processing method disclosed herein may be performed manually by an operator partially or entirely or may be performed automatically partially or entirely.

The processing method is, for example, a method of disassembling the electrical energy storage module 100. The processing method may be, for example, a disassembling method for the electrical energy storage module 100 for the purpose of disposal or a disassembling method for the electrical energy storage module 100 for the purpose of recycling the electrical energy storage device 12. Therefore, the electrical energy storage module 100 as an object of this processing method is preferably, for example, the used electrical energy storage module. Examples of the used electrical energy storage module include an electrical energy storage module to be an object of the disposal and an electrical energy storage module to be an object of recycle.

When the grip part 144 is pulled, for example, it is preferable to pull the grip part 144 in a direction of separating the grip part 144 gripped with the jig A from the electrical energy storage device 12 (see FIG. 1). This makes it easier to separate the bus bar 14 from the electrical energy storage device 12. The jig A is not limited in particular as long as the jig A can keep gripping the grip part 144 for a predetermined period. In a mode illustrated in FIG. 3, a pair of pliers is used as the jig A. The direction of separating from the electrical energy storage device 12 refers to a direction heading upward relative to an upper surface 32u of the sealing plate 32 (see FIG. 1) in this embodiment.

When the grip part 144 is separated, for example, it is preferable to separate the bus bar 14 from the bonding part between the bus bar 14 and the electrode terminal closer to the grip part 144 first. In this embodiment, when the grip part 144 is separated, the bus bar 14 is preferably separated from the bonding part between the positive electrode terminal 40 and the bus bar 14. As illustrated in FIG. 3, the bonding part between the positive electrode terminal 40 and the bus bar 14 is the bonding part between the bus bar 14 and the electrode terminal closer to the grip part 144. Therefore, the bus bar 14 is separated from the electrical energy storage device 12 more easily.

Although there is no particular limitation, the processing method may include marking a portion of the bus bar 14 where the grip part 144 is provided before pulling the grip part 144. Therefore, for example, the grip part 144 is made more recognizable or a surface of the grip part 144 has an anti-slip function, so that more stable gripping can be achieved. Accordingly, the grip part 144 is griped more efficiently and the bus bar 14 can be separated from the electrical energy storage device 12 more easily. In this embodiment, the portion where the grip part 144 is provided refers to the grip part 144 itself, a periphery of the grip part 144, or the grip part 144 itself and the periphery of the grip part 144. Marking the portion where the grip part 144 is provided means that, for example, processing the portion where the grip part 144 is provided so that the property or the material of the surface of the portion where the grip part 144 is provided is made different from the property or the material of the portion other than the portion where the grip part 144 is provided in the bus bar 14.

A method of marking is not limited in particular and may be, for example, a process (for example, knurling process) of providing a concave part and/or a convex part on the surface of the portion where the grip part 144 is provided. The marking may be performed by, for example, pasting a tape on the surface of the portion where the grip part 144 is provided. The tape is, for example, preferably a colored tape or a tape that can provide an anti-slip function to a portion where the tape is pasted.

The timing to mark the portion where the grip part 144 is provided is, for example, preferably in a manufacturing process for the electrical energy storage module 100. In this case, for example, a bus bar with a mark given in advance to the portion where the grip part 144 is provided is preferably used as the bus bar 14. The portion where the grip part 144 is provided may be marked after the bus bar 14 is attached to the electrical energy storage device 12. Alternatively, the portion where the grip part 144 is provided may be marked when the electrical energy storage module 100 is processed.

The first embodiment of the art disclosed herein is described as above. The art disclosed herein, however, can include modifications and changes of the embodiment given above. In other embodiments to be described below, the effect similar to that of the first embodiment is achieved. Note that the parts in the description below that are common to those of the first embodiment will not be explained.

### <Second embodiment>

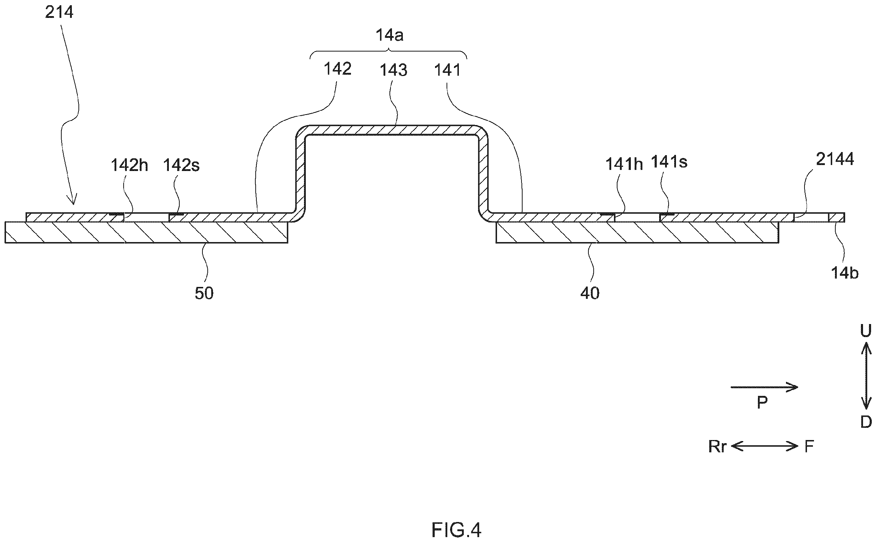

For example, in the first embodiment, the grip part 144 is the protrusion. However, the shape of the grip part is not limited to this. FIG. 4 is a cross-sectional view of bonding parts between a bus bar 214 and the electrode terminals. In a mode illustrated in FIG. 4, the bus bar 214 includes a grip part 2144, which is a penetration hole. The bus bar 214 may be the same as the bus bar 14 except that the grip part 2144 is the penetration hole. Since the grip part 2144 is the penetration hole, a hook-like jig is preferably used, for example, as the jig in the processing method. By hooking a hook part of the jig in the grip part 2144, the grip part 2144 can be gripped.

### <Third embodiment>

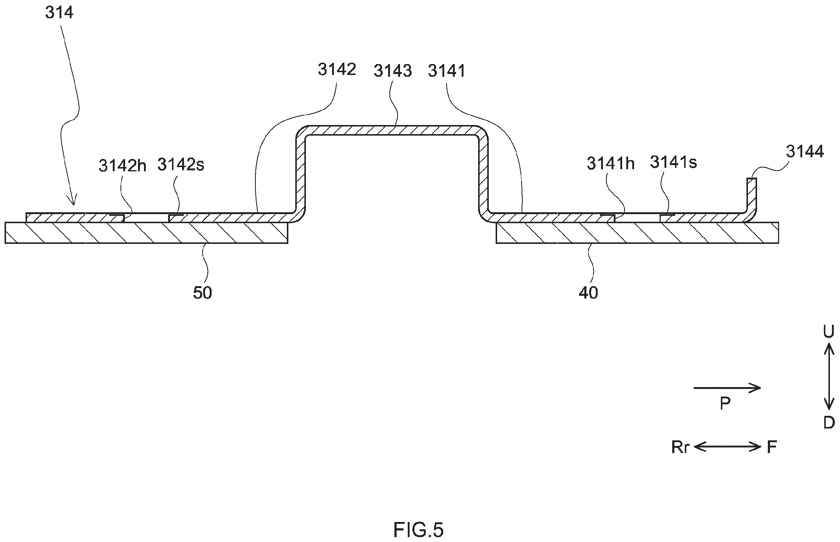

In the first embodiment, for example, the bus bar 14 includes the main body 14a and the extension part 14b, and includes the grip part 144 at the tip end of the extension part 14b. However, the art disclosed herein is not limited to this. FIG. 5 is a cross-sectional view of bonding parts between a bus bar 314 and the electrode terminals. As illustrated in FIG. 5, the bus bar 314 includes a first connection part 3141, a second connection part 3142, and a coupling part 3143. In this embodiment, the bus bar 314 includes the first connection part 3141 at one end part in the first direction P. The first connection part 3141 is overlapped with the positive electrode terminal 40. The bus bar 314 includes the second connection part 3142 at the other end part in the first direction P. The second connection part 3142 is overlapped with the negative electrode terminal 50. In this embodiment, the bus bar 314 includes a grip part 3144 in the first connection part 3141. The grip part 3144 is provided at an end part of the first connection part 3141 in the first direction P. The end part of the first connection part 3141 in the first direction P described herein corresponds to the end part on a side opposite to the second connection part 3142. The grip part 3144 is a projection protruding from a surface here. However, the shape of the grip part 3144 is not limited to this and may be a penetration hole. Note that the bus bar 314 may be the same as the bus bar 14 except the matters described here. In FIG. 5, a reference sign 3141s and a reference sign 3142s denote step differences, and a reference sign 3141h denotes a first penetration hole and a reference sign 3142h denotes a second penetration hole.

### <Fourth embodiment>

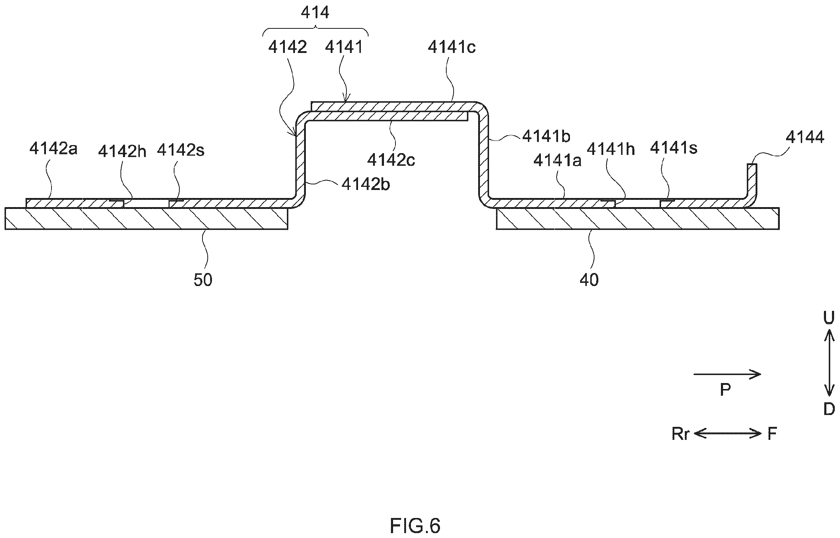

The bus bar used in the embodiment described above is formed of the single metal material. However, the bus bar used in the art disclosed herein is not limited to this. FIG. 6 is a cross-sectional view of bonding parts between a bus bar 414 and the electrode terminals. As illustrated in FIG. 6, the bus bar 414 may include a first metal member 4141 and a second metal member 4142. The first metal member 4141 and the second metal member 4142 are preferably formed of different metals and bonded to each other. The bus bar 414 is preferably a cladding material, for example. The first metal member 4141 is preferably bonded to the positive electrode terminal 40. The second metal member is preferably bonded to the negative electrode terminal 50.

The first metal member 4141 is preferably formed of the same metal as the positive electrode terminal 40, and is made of aluminum or an aluminum alloy, for example. As illustrated in FIG. 6, the first metal member 4141 includes a first connection part 4141a, a first rising part 4141b, and a first coupling part 4141c. The first connection part 4141a is, for example, a portion having a plate shape and connected to the positive electrode terminal 40. In this embodiment, the first connection part 4141a is disposed along an upper surface of the positive electrode terminal 40 and is bonded to the positive electrode terminal 40. The first connection part 4141a is, for example, bonded to the positive electrode terminal 40 in a step difference 4141s provided at an inner wall surface of a first penetration hole 4141h. The first rising part 4141b is, for example, a portion that rises from an end part of the first connection part 4141a on the second metal member 4142 side in the first direction P. The first rising part 4141b here connects between the first connection part 4141a and the first coupling part 4141c. The first coupling part 4141c is, for example, a portion having a plate shape and coupled to the second metal member 4142. In this embodiment, the first coupling part 4141c is coupled to the second metal member 4142 by being bonded to a second coupling part 4142c (for example, diffusion bonding, ultrasonic bonding, laser welding, or resistance welding). Note that the first connection part 4141a and the positive electrode terminal 40 are bonded to each other by, for example, ultrasonic bonding, laser welding, resistance welding, or the like.

The second metal member 4142 is preferably the negative electrode terminal 50 and is made of, for example, copper or a copper alloy. As illustrated in FIG. 6, the second metal member 4142 includes a second connection part 4142a, a second rising part 4142b, and the second coupling part 4142c. The second connection part 4142a is, for example, a portion having a plate shape and connected to the negative electrode terminal 50. In this embodiment, the second connection part 4142a is disposed along an upper surface of the negative electrode terminal 50 and is bonded to the negative electrode terminal 50. The second connection part 4142a is, for example, bonded to the negative electrode terminal 50 in a step difference 4142s provided at an inner wall surface of the second penetration hole 4142h. The second connection part 4142a and the negative electrode terminal 50 are bonded to each other by, for example, ultrasonic bonding, laser welding, resistance welding, or the like. The second rising part 4142b is, for example, a portion that rises from an end part of the second connection part 4142a on the first metal member 4141 side in the first direction P. The second rising part 4142b here connects between the second connection part 4142a and the second coupling part 4142c. The second coupling part 4142c is, for example, a portion having a plate shape and coupled to the first metal member 4141. In this embodiment, the second coupling part 4142c is coupled to the first metal member 4141 by being bonded to the first coupling part 4141c.

As illustrated in FIG. 6, the bus bar 414 includes a grip part 4144. In this embodiment, the bonding strength between the bus bar 414 and the electrode terminal that is closer to the grip part 4144 is lower than the bonding strength between the bus bar and the electrode terminal that is farther from the grip part 4144. In a mode illustrated in FIG. 6, the electrode terminal that is closer to the grip part 4144 is the positive electrode terminal 40. As described above, the positive electrode terminal 40 is bonded to the first connection part 4141a of the first metal member 4141. The bonding between the positive electrode terminal 40 and the first connection part 4141a corresponds to the bonding between members made of aluminum or an aluminum alloy here. The electrode terminal that is farther from the grip part 4144 is the negative electrode terminal 50. As described above, the negative electrode terminal 50 is bonded to the second connection part 4142a of the second metal member 4142. The bonding between the negative electrode terminal 50 and the second connection part 4142a corresponds to the bonding between members made of copper or a copper alloy here. The bonding strength between members made of aluminum or an aluminum alloy is lower than the bonding strength between members made of copper or a copper alloy. By providing the grip part 4144 at a place closer to the bonding part between the bus bar 414 and the electrode terminal with relatively lower bonding strength, the bus bar 414 can be separated from the electrical energy storage device 12 more easily.

As illustrated in FIG. 6, the grip part 4144 is preferably provided at the first metal member 4141. In this embodiment, the grip part 4144 is provided at an end part of the first connection part 4141a on a side opposite to the first rising part 4141b in the first direction P. By providing the grip part 4144 at such a portion, the bus bar 414 can be separated from the positive electrode terminal 40 more easily and the bus bar 414 can be separated from the electrical energy storage device 12 more easily. Aluminum or an aluminum alloy is softer than copper or a copper alloy and is processed more easily. Therefore, providing the grip part 4144 at the first metal member 4141 makes it easier to manufacture the bus bar 414 than providing the grip part in the second connection part 4142a.

### <Fifth embodiment>

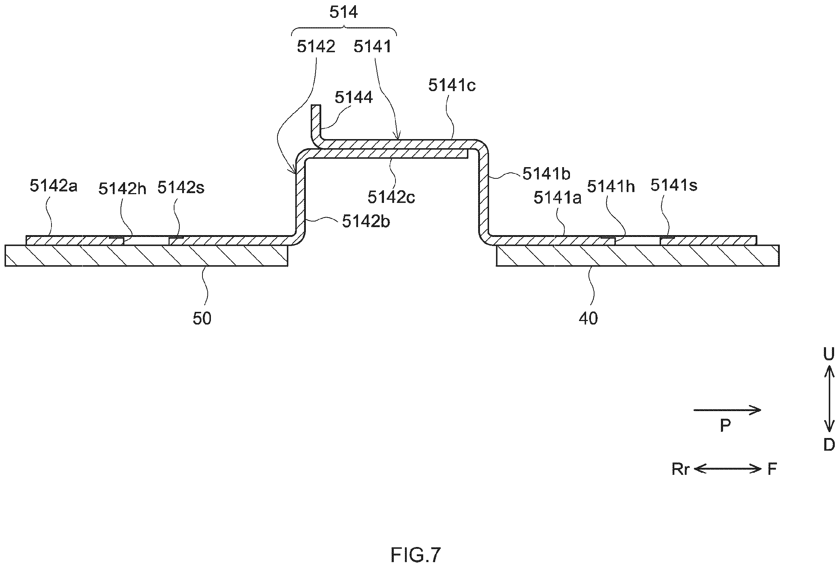

In the fourth embodiment, the grip part 4144 is provided at one end part of the bus bar 414 in the first direction P. However, the grip part does not need to be provided at this portion. FIG. 7 is a cross-sectional view of bonding parts between a bus bar 514 and the electrode terminals. As illustrated in FIG. 7, the bus bar 514 includes a grip part 5144. In this embodiment, the grip part 5144 is provided at a bonding part between a first metal member 5141 and a second metal member 5142. In a mode illustrated in FIG. 7, the bonding part between the first metal member 5141 and the second metal member 5142 is provided at a bonding part between a first coupling part 5141c and a second coupling part 5142c. Here, the grip part 5144 is provided at an end part of the first coupling part 5141c on a second connection part 5142a side in the first direction P at the bonding part between the first coupling part 5141c and the second coupling part 5142c.

The first metal member 5141 and the second metal member 5142 are formed of different metals and the bonding part between both is a bonding part between different kinds of metals. The bonding part between the first metal member 5141 and the second metal member 5142 can have lower bonding strength than the bonding part between the first metal member 5141 and the positive electrode terminal 40 and the bonding part between the second metal member 5142 and the negative electrode terminal 50. In other words, the bonding part between the first metal member 5141 and the second metal member 5142 can have the lowest bonding strength in the bonding parts of a bonding object between the bus bar 514 and the electrode terminals. Therefore, the bus bar 514 can be separated from the electrode terminal more easily.

In the processing methods according to the fourth embodiment and the fifth embodiment, the electrical energy storage module 100 including the bus bars 414 and 514 including the first metal members 4141 and 5141 and the second metal members 4142 and 5142 is processed as the electrical energy storage device 12. The first metal members 4141 and 5141 and the second metal members 4142 and 5142 are formed of different metals and are bonded to each other. The electrical energy storage module 100 according to the fourth embodiment and the fifth embodiment is suitably used as the object of the process in the processing method from the viewpoint of easily separating the bus bars 414 and 514 described above. In FIG. 7, a reference sign 5141a denotes a first connection part, a reference sign 5141b denotes a first rising part, a reference sign 5142b denotes a second rising part, reference signs 5141s and 5142s denote a step difference, a reference sign 5141h denotes a first penetration hole, and a reference sign 5142h denotes a second penetration hole.

### <Sixth embodiment>

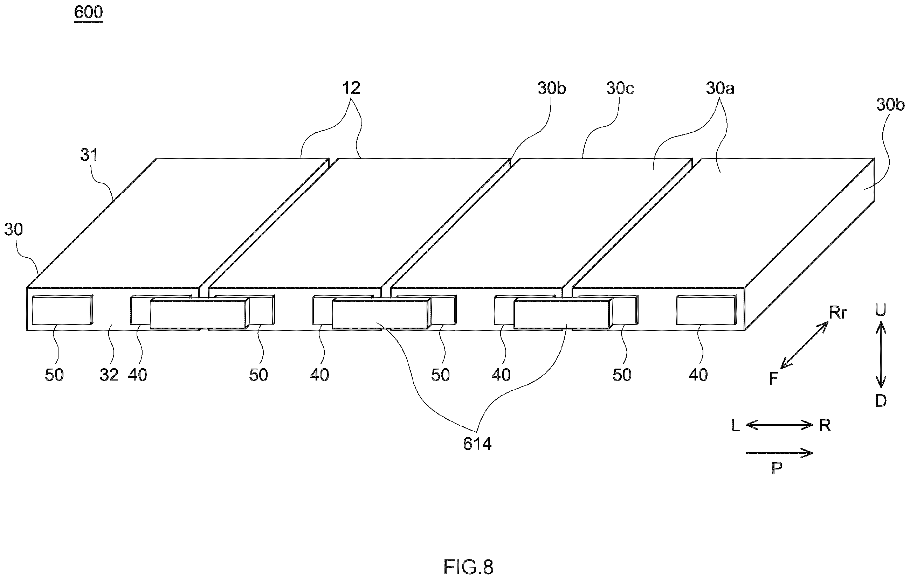

The term "first direction P" in the art disclosed herein does not need to be the direction defined in the embodiment described above. FIG. 8 is a perspective view of an electrical energy storage module 600. In FIG. 8, the entire structure of the electrical energy storage module 600 is schematically illustrated. As illustrated in FIG. 8, the electrical energy storage module 600 includes the electrical energy storage devices 12 and bus bars 614. The electrical energy storage devices 12 are arranged in the first direction P. The bus bar 614 is provided to link the two electrical energy storage devices 12 that are adjacent to each other in the first direction P. Here, the electrical energy storage devices 12 are arranged with the narrow surfaces 30b of the adjacent electrical energy storage devices 12 facing each other. The term "first direction P" described in this embodiment refers to a direction from one narrow surface 30b to the other narrow surface 30b in the electrical energy storage device 12 and a direction from a left (L) side to a right (R) side in FIG. 8 (this similarly applies to a seventh embodiment below). Although FIG. 8 illustrates four electrical energy storage devices 12, this is just one example and it is not intended to limit the number of electrical energy storage devices 12 included in the electrical energy storage module 600. Although one wide surface 30a is disposed on an upper (U) side and the other wide surface 30a is disposed on a lower (D) side, and one narrow surface 30b is disposed on the left (L) side and the other narrow surface 30b is disposed on the right (R) side in FIG. 8, this is just one example. It is not intended to limit the mode of installation of the electrical energy storage module 600 (this similarly applies to the seventh embodiment below).

In a mode illustrated in FIG. 8, in the two electrical energy storage devices 12 that are adjacent to each other in the first direction P, the bus bar 614 is provided to link the positive electrode terminal 40 of one electrical energy storage device 12 and the negative electrode terminal 50 of the other electrical energy storage device 12. As the bus bar 614, any bus bar among the bus bars 14, 214, 314, 414, and 514 according to the first to fifth embodiments may be used.

### <Seventh embodiment>

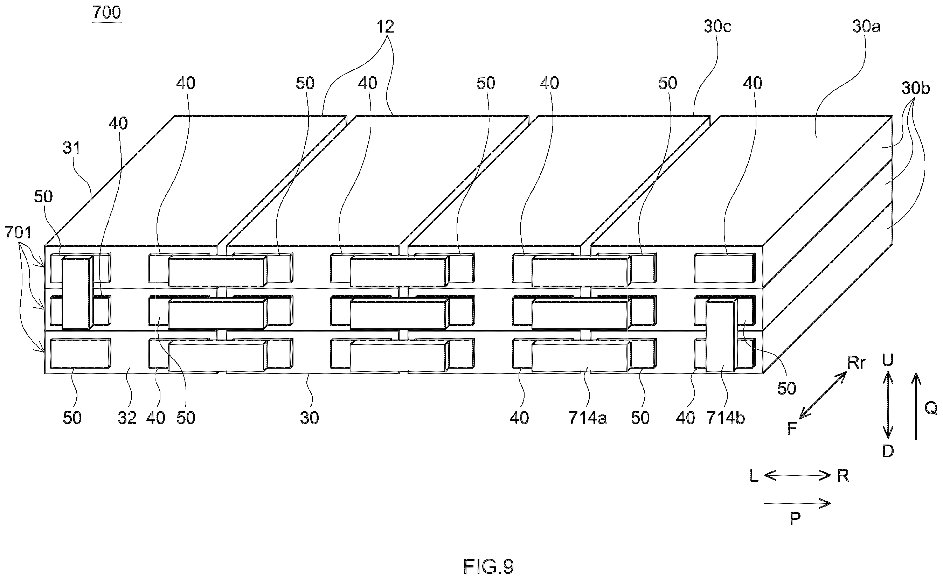

FIG. 9 is a perspective view of an electrical energy storage module 700. In FIG. 9, the entire structure of the electrical energy storage module 700 is schematically illustrated. As illustrated in FIG. 9, the electrical energy storage module 700 includes a plurality of electrical energy storage device groups 701. The electrical energy storage device group 701 includes the electrical energy storage devices 12 and first bus bars 714a. The electrical energy storage devices 12 are arranged in the first direction P. The first bus bar 714a is provided to link the two electrical energy storage devices 12 that are adjacent to each other in the first direction P. Here, the electrical energy storage devices 12 are arranged so that the narrow surfaces 30b of the adjacent electrical energy storage devices 12 face each other. In a mode illustrated in FIG. 9, in the two electrical energy storage devices 12 that are adjacent to each other in the first direction P, the bus bar 714 is provided to link the positive electrode terminal 40 of one electrical energy storage device 12 and the negative electrode terminal 50 of the other electrical energy storage device 12. As the first bus bar 714a, any bus bar among the bus bars 14, 214, 314, 414, and 514 according to the first to fifth embodiments may be used.

As illustrated in FIG. 9, the electrical energy storage device groups 701 are arranged (overlapped on each other) in the second direction Q and electrically connected to each other. In this embodiment, the electrical energy storage device groups 701 are arranged (overlapped on each other) so that the wide surfaces 30a of the two electrical energy storage devices 12 that are adjacent to each other in the second direction Q are overlapped on each other. The term "second direction Q" described in this embodiment refers to a direction from one wide surface 30a to the other wide surface 30a in the electrical energy storage device 12 and a direction from the lower (D) side to the upper (U) side in FIG. 9. In this embodiment, the electrical energy storage device groups 701 are electrically connected to each other through second bus bars 714b. As illustrated in FIG. 9, in the electrical energy storage devices 12 that are adjacent to each other in the second direction Q, the second bus bar 714b is provided to link the positive electrode terminal 40 of one electrical energy storage device 12 and the negative electrode terminal 50 of the other electrical energy storage device 12 at one end part or the other end part in the first direction P. As the second bus bar 714b, a conventionally known bus bar that has been used for this type of electrical energy storage module may be used, and any bus bar among the bus bars 14, 214, 314, 414, and 514 according to the first to fifth embodiments is preferably used. Although FIG. 9 illustrates three electrical energy storage device groups 701, this is just one example and it is not intended to limit the number of electrical energy storage device groups 701. Although FIG. 9 illustrates the electrical energy storage device group 701 including four electrical energy storage devices 12, this is just one example and it is not intended to limit the number of electrical energy storage devices 12 included in the electrical energy storage device group 701.

As described above, the following items are given as specific aspects of the art disclosed herein.
Item 1: The electrical energy storage module including: the plurality of electrical energy storage devices arranged in the first direction; and the bus bar provided to link two of the electrical energy storage devices that are adjacent to each other in the first direction, in which the bus bar includes the grip part that corresponds to the projection protruding from the surface of the bus bar or the penetration hole.
Item 2: The electrical energy storage module according to Item 1, in which the grip part is provided at one end part of the bus bar in the first direction.
Item 3: The electrical energy storage module according to Item 1 or 2, in which the bus bar includes the main body and the extension part extending from the main body in the first direction, and the bus bar includes the grip part at the tip end of the extension part.
Item 4: The electrical energy storage module according to any one of Items 1 to 3, in which the electrical energy storage device includes the positive electrode terminal and the negative electrode terminal on the outer surface of the electrical energy storage device, in the two adjacent electrical energy storage devices, the bus bar is provided to link the positive electrode terminal of one electrical energy storage device and the negative electrode terminal of the other electrical energy storage device, the bus bar includes the first metal member and the second metal member that are formed of different metals and are bonded to each other, and the first metal member is bonded to the positive electrode terminal and the second metal member is bonded to the negative electrode terminal.
Item 5: The electrical energy storage module according to any one of Items 1 to 4, in which the bonding strength between the bus bar and the electrode terminal that is closer to the grip part is lower than the bonding strength between the bus bar and the electrode terminal that is farther from the grip part.
Item 6: The electrical energy storage module according to any one of Items 1 to 5, in which the grip part is provided at the bonding part between the first metal member and the second metal member.
Item 7: The electrical energy storage module according to any one of Items 4 to 6, in which the grip part is provided at the first metal member.
Item 8: The processing method for processing the electrical energy storage module including: the plurality of electrical energy storage devices including the electrode terminals and arranged in the first direction; and the bus bar provided to link two of the electrical energy storage devices that are adjacent to each other in the first direction, the processing method including separating the bus bar from the electrical energy storage device by pulling the grip part provided at the bus bar, the grip part corresponding to the projection protruding from the surface of the bus bar or the hole.
Item 9: The processing method according to Item 8, in which in the pulling, the grip part gipped with the jig is pulled in the direction of separating from the electrical energy storage device.
Item 10: The processing method according to Item 8 or 9, in which in the separating, first, the bus bar is separated from the bonding part between the bus bar and the electrode terminal that is closer to the grip part.
Item 11: The processing method according to any one of Items 8 to 10, including marking the portion of the bus bar where the grip part is provided, before the grip part is pulled.
Item 12: The processing method according to any one of Items 8 to 11, in which the electrical energy storage module including the bus bar including the first metal member and the second metal member that are formed of different metals and are bonded to each other is processed as the electrical energy storage device.

Although the embodiments of the art disclosed herein have been described above, it is not intended to limit the art disclosed herein to the embodiments. The art disclosed herein can be implemented in other embodiments. The techniques described in the scope of claims include those in which the embodiments exemplified above are variously modified and changed. For example, another modification can replace a part of the aforementioned embodiment or be added to the aforementioned embodiment. Additionally, the technical feature may be deleted as appropriate unless such a feature is described as an essential element.

## Claims

1. An electrical energy storage module (100, 600, 700) comprising:
a plurality of electrical energy storage devices (12) arranged in a first direction (P); and
a bus bar (14, 214, 314, 414, 514, 614, 714a) provided to link two of the electrical energy storage devices (12) that are adjacent to each other in the first direction (P), wherein the bus bar (14, 214, 314, 414, 514, 614, 714a) includes a grip part (144, 2144, 3144, 4144, 5144) that corresponds to a projection protruding from a surface of the bus bar (14, 214, 314, 414, 514, 614, 714a) or a penetration hole.

2. The electrical energy storage module (100, 600, 700) according to claim 1, wherein the grip part (144, 2144, 3144, 4144) is provided at one end part of the bus bar (14, 214, 314, 414, 614, 714a) in the first direction (P).

3. The electrical energy storage module (100, 600, 700) according to claim 1, wherein
the bus bar (14, 214) includes a main body (14a) and an extension part (14b) extending from the main body (14a) in the first direction (P), and
the bus bar (14, 214) includes the grip part (144, 2144) at a tip end of the extension part (14b).

4. The electrical energy storage module (100, 600, 700) according to claim 1, wherein
the electrical energy storage device (12) includes a positive electrode terminal (40) and a negative electrode terminal (50) on an outer surface of the electrical energy storage device (12),
in the two adjacent electrical energy storage devices (12), the bus bar (414, 514) is provided to link the positive electrode terminal (40) of one electrical energy storage device (12) and the negative electrode terminal (50) of the other electrical energy storage device (12),
the bus bar (414, 514) includes a first metal member (4141, 5141) and a second metal member (4142, 5142) that are formed of different metals and are bonded to each other, and
the first metal member (4141, 5141) is bonded to the positive electrode terminal (40) and the second metal member (4142, 5142) is bonded to the negative electrode terminal (50).

5. The electrical energy storage module (100, 600, 700) according to claim 4, wherein bonding strength between the bus bar (414) and the electrode terminal (40, 50) that is closer to the grip part (4144) is lower than bonding strength between the bus bar (414) and the electrode terminal (40, 50) that is farther from the grip part (4144).

6. The electrical energy storage module (100, 600, 700) according to claim 4, wherein the grip part (5144) is provided at a bonding part between the first metal member (5141) and the second metal member (5142).

7. The electrical energy storage module (100, 600, 700) according to any one of claims 4 to 6, wherein the grip part (4144, 5144) is provided at the first metal member (4141, 5141).

8. A processing method for processing an electrical energy storage module (100, 600, 700) including:
a plurality of electrical energy storage devices (12) including electrode terminals (40, 50) and arranged in a first direction (P); and
a bus bar (14, 214, 314, 414, 614, 714a) provided to link two of the electrical energy storage devices (12) that are adjacent to each other in the first direction (P),
the processing method comprising,
separating the bus bar (14, 214, 314, 414, 614, 714a) from the electrical energy storage device (12) by pulling a grip part (144, 2144, 3144, 4144, 5144) provided at the bus bar (14, 214, 314, 414, 614, 714a), the grip part (144, 2144, 3144, 4144, 5144) corresponding to a projection protruding from a surface of the bus bar (14, 214, 314, 414, 614, 714a) or a hole.

9. The processing method according to claim 8, wherein in the pulling, the grip part (144, 2144, 3144, 4144, 5144) gipped with a jig (A) is pulled in a direction of separating from the electrical energy storage device (12).

10. The processing method according to claim 8, wherein in the separating, first, the bus bar (14, 214, 314, 414, 614, 714a) is separated from a bonding part between the bus bar (14, 214, 314, 414, 614, 714a) and the electrode terminal (40, 50) that is closer to the grip part (144, 2144, 3144, 4144, 5144).

11. The processing method according to claim 8, comprising marking a portion of the bus bar (14, 214, 314, 414, 614, 714a) where the grip part (144, 2144, 3144, 4144, 5144) is provided, before the grip part (144, 2144, 3144, 4144, 5144) is pulled.

12. The processing method according to any one of claims 8 to 11, wherein the electrical energy storage module (100, 600, 700) including the bus bar (414, 514) including a first metal member (4141, 5141) and a second metal member (4142, 5142) that are formed of different metals and are bonded to each other is processed as the electrical energy storage device (12).
